(19) Europäisches Patentamt / European Patent Office / Office européen des brevets

(11) **EP 2 853 922 B1**

(12) **EUROPEAN PATENT SPECIFICATION**

(45) Date of publication and mention of the grant of the patent:
**30.11.2016 Bulletin 2016/48**

(51) Int Cl.:
***G01S 19/43*** (2010.01)     ***G01S 19/50*** (2010.01)

(21) Application number: **14001956.3**

(22) Date of filing: **05.06.2014**

(54) **Method for determining the movement direction and position of a vehicle based on satellite navigation and the system for carrying out this method**

Verfahren zur Bestimmung der Bewegungsrichtung und Lage eines Fahrzeugs auf Grundlage von Satellitennavigation und System zur Durchführung dieses Verfahrens

Procédé permettant de déterminer la direction du mouvement et la position d'un véhicule sur la base de données de navigation par satellite et système de mise en oeuvre de ce procédé

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **25.09.2013 CZ 20130741**

(43) Date of publication of application:
**01.04.2015 Bulletin 2015/14**

(73) Proprietor: **AZD Praha S.R.O.**
**106 17 Praha 10 (CZ)**

(72) Inventor: **Bazant, Lubor**
**530 02 Pardubice (CZ)**

(74) Representative: **Reichel, Pavel**
**Lopatecka 14**
**147 00 Praha 4 (CZ)**

(56) References cited:
**WO-A1-01/18558     US-A1- 2004 210 389**

**Description**

**Field of the invention**

The subject of this invention is a method for determining the movement direction and position of a vehicle, especially a rail vehicle, based on satellite navigation and the system implementing this method.

**Description of the prior art**

A number of systems have been developed for determining the absolute position of a train and the direction vector of train movement (on a switch). These systems can be roughly divided into two groups - the first contains systems which are fixed in the tracks with the possibility of parts being located on a vehicle (balises, magnetic marks, axle counters, and track circuits), while the second type of systems represent autonomous systems installed in a vehicle. Systems fixed in the track are used for safety applications as standard due to their simpler design and easier risk analysis compared to autonomous systems in vehicles, which are generally based on a combination of various types of sensors and the recursive fusion or filtration of their data.

Autonomous systems always rely on a satellite navigation system, which is used at least to determine absolute location, and often also for determining speed and movement direction. Systems have already been developed which can determine the movement direction or changes of movement direction with sufficient accuracy for differentiating the actual direction of movement of a train on a switch; these rely on the principle of interferometry of received signals from the satellite systems of satellite navigation. These systems and methods include two or more receivers (antennas) of the satellite navigation signal and require that the following condition is met in order to determine the attitude of the system or the orientation of the connecting line of the antennas fixed with the system compared to the referential system:

- The antennas of the receivers of the satellite navigation signal are located in the longitudinal axis of the vehicle;
- It is necessary to solve a system of equations of single differenced carrier phase measurements on received satellite navigation signal for determining the vector of the connecting line between the antennas in three dimensional space (signals from at least three satellites must be permanently received by the receivers);
- Double differencing of the measured carrier phase must be applied to remove different time offsets of individual receivers compared to the time of the satellite navigation system;
- Initial ambiguities must be determined (the integer number of wavelengths between the antenna of the receiver and the antenna of the satellite) during initialization and reinitialization of the method for determining the direction vector of the connecting line of the antennas.

In the document WO 01/18558 A1 a method of determining the movement direction and position of a vehicle, especially a track vehicle, based on satellite navigation is described. Previous methods determine and compare the orientation of the vector connecting line between the two antennas in three dimensional space with possible orientations of the connecting line between the two antennas in the map database of the track.

The goal of this invention is to increase the availability of determining the vehicle movement direction and vehicle position even when a low number of signals (satellites) are available, as well as to reduce the frequency of reinitialization and to increase the reliability of the determined direction of vehicle movement and its changes and also position of the vehicle when receiving signals from several satellites. Another goal is to remove the time-demanding and difficult (with regards to risk analysis) determination of ambiguities during initialization and reinitialization of the ground part of the system on a vehicle after interruption of signal reception from satellites and to remove the necessity of application of double differences to determine time offsets between the time bases of individual satellite navigation receivers and the satellite navigation system's time.

**Summary of the invention**

The subject matter of the invention is a method for determining the movement direction and position of a vehicle, especially a rail vehicle, based on satellite navigation, whereas first the position of the vehicle is determined from code phase measurements on the signal of the satellite navigation system and the reliability interval for this position on a basically straight segment of the vehicle's track. This segment of the track must be longer than the reliability interval and must contain the whole reliability interval. The position determined in this manner is assigned to an identical position within the track map database, and a corresponding direction is also assigned based on this position within the track map database.

The carrier phase of the satellite navigation signal is measured from at least one satellite, whose position is known at the time of this measurement, with respect to at least one pair of antennas located on the vehicle. Subsequently, the difference between the measured carrier phase values of the signal received by individual antennas is determined, followed by determining, from the known position of the satellite and the positions of at least one pair of antennas determined from the known trajectory of the track as listed in the track map database and assigned to the vehicle on the track, the actual distances between the antennas and satellite.

The subject matter of the invention lies in the fact that subsequently also the difference between these distances for at least one pair of antennas is determined, and where by comparing the differences between actual distances and differences of measured carrier phases of the signal of the satellite navigation signal the closest differences are chosen and the actual position and movement direction of vehicle on the track is determined wherein the accuracy of the determined position of the vehicle on the track is proportional to the radius of the curve of the track.

The required condition for the application of this method is a common time base for the carrier phase measurements on satellite navigation signal towards both antennas. The position or the coordinates of the antennas mean here, as well as further in this document, the position or coordinates of the phase centre of the antenna, i.e. the geometric point used as the base point for measurements on the antenna. Similarly, the connecting line between the antennas is the connecting line between the phase centres of the antennas.

A pair of antennas may be advantageously oriented transversally towards the longitudinal axis of the vehicle.

A large number of satellites may be used to increase the reliability of determining the position and movement direction of the vehicle on the track.

The methods based on this invention may be used to determine the movement direction of a vehicle on a track switch. To increase reliability in determining the position and movement direction of a vehicle on the track, it is also possible to use it to detect the initial and final angle on a curve in the track when the vehicle crosses this curve and to detect consecutive curves when the vehicle crosses these curves. To increase reliability in determining the position and movement direction of a vehicle on the track, it is also possible to use a pair of antennas located on opposite ends of the vehicle. This method may also be used to refine or calibrate the absolute position of a vehicle obtained from other relative sensors located on the vehicle.

The subject of the invention also includes a system implementing the methods described above, which includes at least one satellite navigation signal receiver from at least one satellite. A receiver, connected via its antenna inputs to a pair of antennas located on the vehicle, has independent channels for processing the signals from both antenna inputs, allowing the parallel processing of signals of an identical satellite from both of these inputs, and is for these channels equipped by a common time base consisting of a local oscillator. Antennas are oriented on the vehicle in a manner ensuring that the connecting line between their centres is transversally oriented towards the longitudinal axis of the vehicle and has a constant, known length, whereas the receiver is connected to an onboard processing unit with a map database of the track. The onboard processing unit may be connected to an odometer and/or Doppler radar. The vehicle may also be equipped with at least another pair of antennas with another corresponding receiver.

**Brief description of the drawings**

The attached drawings schematically depict examples of the implementation of this invention. Fig. 1a depicts a block diagram of the system; Fig 1b depicts a rail vehicle with this system on a track. Fig. 2a depicts the principle of the difference of carrier phase measurements on the satellite signal, while Fig. 2b shows the principle of changes in difference caused by hanging the orientation of the connecting line between antennas on a vehicle relative to the navigation satellite system. Fig. 3 then depicts the principle of initialization of the method for determining movement direction and position of the vehicle and the system used for this initialization, where the vehicle is depicted on a direct section E of the track and part D of section E is used for initialization of the system. Fig. 4 depicts the determination of the correct position of the vehicle on the track by comparing the difference of the carrier phases measured on the satellite signal to the difference of actual distances between the receiver antennas and the satellite of navigation system. Fig. 5 then depicts two model examples of permanent track shielding by surrounding terrain. Fig. 6 depicts the principle of the operation of this system in a curve on the track, while Fig. 7 shows the operation of a system when there are more than two satellites for increased reliability. Fig. 8 depicts the principle of a variant of the system with increased reliability which comprises two receivers and two satellites, where each receiver has two antenna inputs.

**Examples of preferred embodiments**

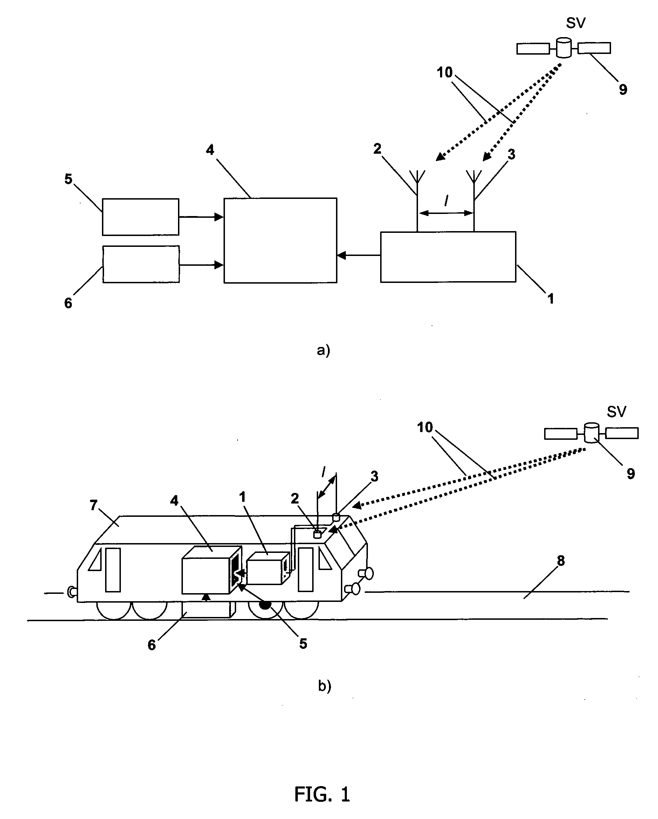

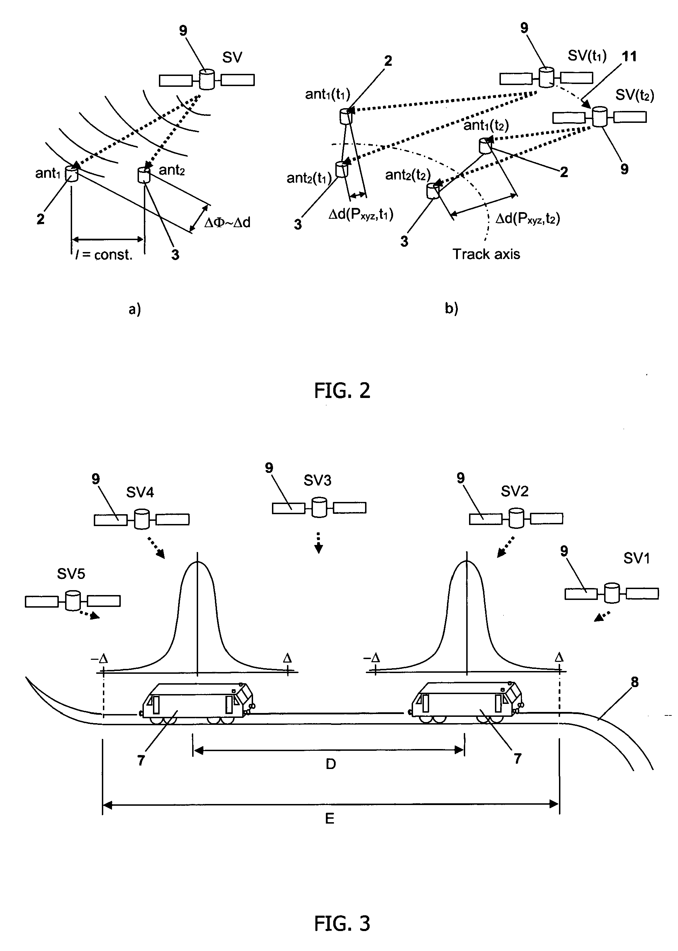

A block diagram of the system for determining the movement direction and position of a vehicle 7 on the principle of satellite navigation is depicted in Fig. 1a, and a diagram of rail vehicle 7 on track 8 with the system is shown on Fig. 1b. The system includes a receiver 1 for signals 10 from satellite navigation from a satellite 9 on a vehicle 7. The receiver 1 is connected via its antenna inputs to a pair of antennas 2, 3 located on vehicle 7, has independent channels for processing signals from both antenna inputs allowing the parallel processing of signals 10 from the identical satellite 9 from both of these inputs, and is equipped with a common time base consisting of a local oscillator. Antennas 2, 3 on vehicle 7 are placed and oriented so that the connecting line between their centres is in the transverse direction to the longitudinal axis of the vehicle 7 and has a fixed known length l; the receiver 1 is connected to an onboard processing unit 4 with a map database of the track 8. The receiver 1 is able to measure the carrier phase of signals 10 of the satellite navigation system to both antennas 2, 3 (see Fig. 2a) in real time, and send measured values to the onboard processing unit 4. The receiver is able to decode a navigation message from the signal 10 of the satellite navigation system and provide the ephemerides of the satellites 9 (i.e. the parameters of their orbits 11) to the onboard processing unit 4.

The invention additionally relies on the principle of interferometry, where a change of the orientation of the connecting line between antennas 2, 3 compared to the source of signal 10, satellite 9, causes a change of the carrier phases of the signal 10 of the satellite navigation system on antennas 2, 3 (see Fig. 2b) and a corresponding change in the single difference $\Delta\Phi$ of these carrier phases. A change of the orientation of the connecting line between antennas 2, 3 towards the source of signal 10 will also cause the change of the actual distances of antennas 2, 3 from the satellite 9 and a corresponding change of the single difference $\Delta d$ of actual distances. The change of the single difference of the measured carrier phases, transferred to metrical units, is then equal to the change of the single difference of actual distances.

The invention thus relies on the comparison of the single difference of measured carrier phases of the signal 10 of the satellite navigation system, sent from satellite 9 to the antennas 2, 3, to the single differences of the actual distances of antennas 2, 3 to the satellite 9. The single differences of the actual distances are obtained from the positions of the satellite 9 and antennas 2, 3. The position of the satellite 9 is computed from parameters of the orbit 11 of satellite 9 at the given time of the satellite navigation system. The positions of antennas 2, 3 are determined in discrete points from the known trajectory (axis) of track 8 based on the distances of antennas 2, 3 and the altitude of the centre of the connecting line between antennas 2, 3 above track 8 depending on the parameters of vehicle 7. That is, for each $i$ - th position $P_{xyz}(i)$ of vehicle 7 on the axis of track 8, the position and orientation of the connecting line between antennas 2, 3 is unambiguously determined by the parameters of the track 8 and the parameters of the vehicle 7 (disregarding the "rocking" of vehicle 7 or specifically vehicle body on track 8). This unambiguously also determines the difference of actual distances $\Delta d^i(t)$ between the position of the satellite 9 and the positions of antennas 2, 3 for each $i$ -th position of the vehicle 7 on the track 8 for the given time $t$ of the satellite navigation system (see Fig. 2b). Determining the orientation of the connecting line between the antennas 2, 3 and the direction of the longitudinal axis of the vehicle 8 is thus based only on the dependence of the single difference of actual distances on the position of the vehicle 7 on the track 8 at the given time of the satellite navigation system.

Previous methods determine and compare the orientation of the vector of the connecting line between antennas 2, 3 in three-dimensional space with possible orientations of the connecting line between antennas 2, 3 in the map database of track 8. The method used in this invention computes and compares only the scalar value of the single difference of carrier phases of signal 10 from satellite 9 with single differences of actual distances from satellite 9 to antennas 2, 3 for each $i$ - th position $P_{xyz}(i)$ of vehicle 7 on the axis of track 8. The position of satellite 9 is determined for time $t_{Rx}$ in the clock of receiver 1 which carried out the measurement of the carrier phases of signal 10 of the satellite navigation system. The resulting error, caused by a change of the position of satellite 9 during the travel time of the signal 10 is negligible in the difference of the measured carrier phases (at the worst case amounting to $10^{-5}$m).

The method used to determine the movement direction and position of a vehicle based on the principle of satellite navigation in compliance with this invention is as follows. At each moment, we measure the carrier phase of the signal 10 of the satellite navigation system transmitted from one satellite 9 and received at both antennas 2, 3. This measurement for one of the channels of the receiver 1 is described, in metric units, by formula (1).

$$\Phi(t_{Rx}) = \rho(t_{Rx}) + c(\varepsilon_{Rx}(t_{Rx}) - \varepsilon_{Sat}(T)) + \lambda \cdot N + d\rho(T) - \\ - d_{ion} + d_{trop} + \varepsilon(\Phi_{mp}) + \varepsilon(\Phi_{line}) + \varepsilon(\Phi_{Rx}) \tag{1}$$

$\Phi(t_{Rx})$ ... measured carrier phase in metres (= $\lambda \cdot \phi(t_{Rx})$ measured phase in cycles) in time $t_{Rx}$
$\rho(t_{Rx})$ ... pseudorange between antennas 2 or 3 and satellite 9 in time $t_{Rx}$
$\varepsilon_{Rx}(t_{Rx})$ ... time offset between the time $t_{Rx}$ of receiver 1 and time $t$ of the satellite navigation system
$\varepsilon_{Sat}(T)$ ... time offset between the time $T$ of satellite 9 and time $t$ of the satellite navigation system
$c$ ... speed of light
$\lambda$ ... wavelength of the carrier of signal 10 transmitted by satellite 9
$N$ ... ambiguities - integer number of wavelengths between the antennas of receiver 2 or 3 and the antenna of satellite 9
$d\rho(T)$ ... error in the position of satellite 9
$d_{ion}$ ... error caused by the passing of satellite navigation signal 10 through the ionosphere
$d_{trop}$ ... error caused by the passing of satellite navigation signal 10 through the troposphere
$\varepsilon(\Phi_{mp})$ ... error caused by multi-path propagation of satellite navigation signal 10

$\varepsilon(\Phi_{line})$ ... bias of antennas 2 or 3 (incl. lead-in)

$\varepsilon(\Phi_{Rx})$ ... noise of carrier phase measurement in the given processing channel of receiver 1 of the satellite navigation system

$t_{Rx}$ ... time in the clock of receiver 1 of the satellite navigation system

$T$ ... time in the clock of satellite 9 of the satellite navigation system

The measured carrier phases of signal 10 of the satellite navigation system are used to determine a single difference in (metric units), as specified in formula (2). When the connecting line between antennas 2, 3 has a length of, roughly, a few metres, both processing channels will have identical values for the following parameters: time offset between the time of clock in receiver 1 and the time of the satellite navigation system; time offset between the time of clock in satellite 9 and the time of the satellite navigation system; error in the position of satellite 9 whose signal 10 is received by antennas 2, 3; error caused by the ionosphere and troposphere. Multipath propagation of signal 10 of the satellite navigation system, mutual bias of antennas 2, 3 and mutual noise of carrier phase measurements between the processing channels will determine the measurement error.

$$\Delta\Phi(t_{Rx}) = \Delta\rho(t_{Rx}) + \lambda \cdot (N_1 - N_2) + \Delta\varepsilon(\Phi_{mp}) + \Delta\varepsilon(\Phi_{line}) + \Delta\varepsilon(\Phi_{Rx}) \qquad (2)$$

The position of satellite 9 is computed in the next step. The axis of the track in the surroundings of the last known position of vehicle 7 on the track 8 is then discretized into $n$ points $P_{xyz}(i)$, where $i = 1...n$, corresponding to the possible position of vehicle 7 on track 8. From the known trajectory (i.e. the axis and slope parameters) of track 8, parameters of vehicle 7 and the known length of the connecting line between antennas 2, 3, we determine for each point $P_{xyz}(i)$ a pair of coordinates of positions of antennas 2, 3.

This is followed by determining the difference of actual distances between these pairs of coordinates of antennas 2, 3 and the coordinates of satellite 9 in the time of receiver 1. These differences for each $i$-th position $P_{xyz}(i)$ of vehicle 7 on track 8 are described in formula (3).

$$\Delta d^i(t_{Rx}) = d_1^i(t_{Rx}) - d_2^i(t_{Rx}) =$$
$$= \sqrt{(x_1^i - x_S(t_{Rx}))^2 + (y_1^i - y_S(t_{Rx}))^2 + (z_1^i - z_S(t_{Rx}))^2} - \qquad (3)$$
$$- \sqrt{(x_2^i - x_S(t_{Rx}))^2 + (y_2^i - y_S(t_{Rx}))^2 + (z_2^i - z_S(t_{Rx}))^2}$$

$\Delta d^i(t_{Rx})$ difference of the distances between the position of the phase centre of the antenna of satellite 9 and the positions of the phase centres of antennas 2, 3 of receiver 1 in the $i$-th position $P_{xyz}(i)$ of vehicle 7 on track 8 in time

$t_{Rx}$ $d_1^i(t_{Rx})$

distance between the position of the phase centre of the antenna of satellite 9 and the position of the phase centre of the first antenna 2 of receiver 1 in the $i$-th position $P_{xyz}(i)$ of vehicle 7 on track 8 in time $t_{Rx}$ $d_2^i(t_{Rx})$

distance between the position of the phase centre of the antenna of satellite 9 and the position of the phase centre of the second antenna 3 of receiver 1 in the $i$-th position $P_{xyz}(i)$ of vehicle 7 on track 8 in time $t_{Rx}$ $x_1^i, y_1^i, z_1^i$

coordinates of the position of the phase centre of the first antenna 2 in the $i$-th position $P_{xyz}(i)$ of vehicle 7 on track 8 in time $t_{Rx}$ $x_2^i, y_2^i, z_2^i$ coordinates of the position of the phase centre of the second antenna 3 in the $i$-th position $P_{xyz}(i)$ of vehicle 7 on track 8 in time $t_{Rx}$

$x_S(t_{Rx}), y_S(t_{Rx}), z_S(t_{Rx})$ coordinates of the position of the phase centre of the antenna of satellite 9 in time $t_{Rx}$

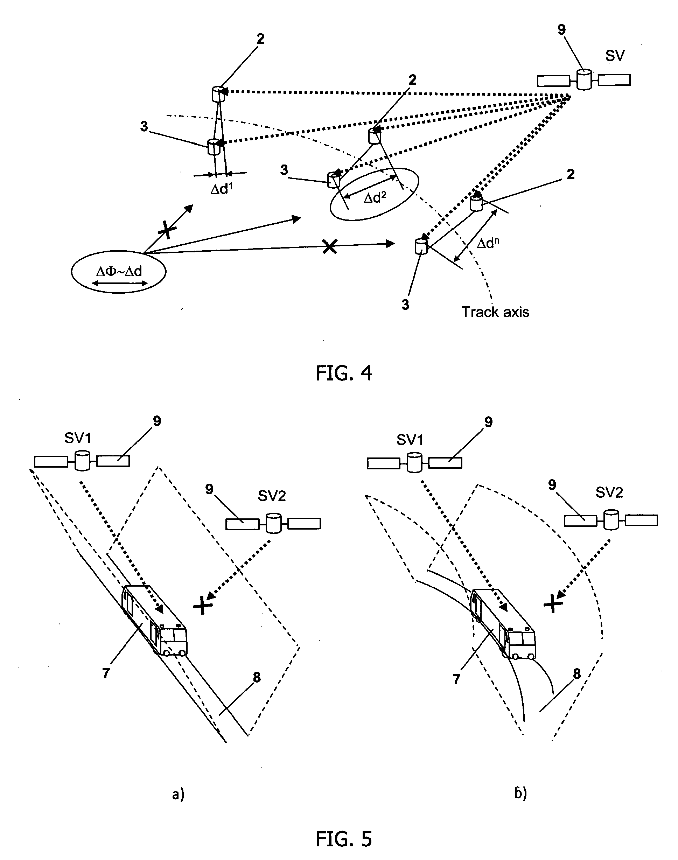

Finally, the differences are compared (see Fig. 4) and the best matching values of actual and measured single differences are selected, allowing the determination of position $P_{xyz}$ of vehicle 7 on track 8, see formula (4).

$$\forall i \in Z^+, \exists i_0 : \left| (\Delta d^{i_0}(t_{Rx}) - \Delta\Phi(t_{Rx})) \right| < \left| (\Delta d^i(t_{Rx}) - \Delta\Phi(t_{Rx})) \right| \Rightarrow P_{xyz} = P_{xyz}(i_0) \qquad (4)$$

The accuracy of the determined position of vehicle 7 on track 8 is directly proportional to the radius of the curve - the lower the radius of the curve, the higher the precision of the determined position and on the other hand if the radius → ∞ (i.e. if the track is straight) the position will be indeterminate. It is clear that to determine the position in each moment with sufficient precision (and this applies even to a straight section of a track) the receiver 1 must be equipped with an odometric (speed meter) system including an odometer 5 and/or Doppler radar 6. On the other hand, the absolute position of vehicle 7 on track 8, determined only by the onboard relative sensors of the odometric system from a certain known point on track 8 will be made precise / calibrated when the vehicle passes through a curve or diverging track of a switch, when the absolute position of vehicle 7 on track 8 is determined by this comparative method.

As is clear from formula (2), unknown ambiguities $N_1, N_2$ lead to ambiguous solutions. It is thus necessary to initialize the method - determine for the given satellite 9 the difference $N_1 - N_2$ and hence find an unambiguous solution for determining the carrier phase difference.

Initialization may be carried out with the use of positioning based on measuring the code phase in some of the satellite navigation signals 10 and a sufficiently wide confidence (reliability) interval (-Δ; Δ) for a Gauss or Rayleigh distribution on the part D of a straight section E of track 8, together with a database of the map of track 8 linked to data on position and direction (see Fig. 3).

The conditions for the reception of signal 10 and determining the position in such a section of track 8 should be very good, identical with the conditions considered for so-called virtual balise (a specified point on track 8 where the absolute position of vehicle 7 is checked by satellite navigation), i.e. an area with a clear view of the sky, limited occurrence of multipath propagation, sufficient number of LOS (Line Of Sight - direct visibility) satellites 9 in a constellation with a low DOP (Dilution Of Precision-a parameter of the constellation - geometric configuration of satellites which affects positional precision). In case of reinitialization of the system while in operation, the same procedure is used as in the case of initialization or the system reinitializes with the use of the odometric system and a map of track 8 in a time interval which will not lead to an error exceeding the admissible error in the measured travelled distance.

Placement of antennas 2, 3 on vehicle 7 (on the roof of vehicle 7):

Due to the frequent occurrence of shielding on track 8 by the terrain (surrounding environment), the concept of this method considers also the case of permanent shielding of antennas 2, 3 of receiver 1 by terrain from the signals 10 of satellites 9. In this case LOS satellites 9 are located only in the area between two virtual half-planes in case of a direct track 8 (Fig. 5a) or both virtual parts of surfaces of a cones in case of a curved track 8 (Fig. 5b).

Thus, the expectation is to have a larger number of available LOS satellites 9 with low elevation located in the longitudinal axis of vehicle 7 rather than in the direction of its transverse axis, where satellites 9 with low elevation are more likely to be shielded by the terrain. To increase the availability and ensure the necessary precision of the system and the method of determining movement direction, changes of movement direction and position of vehicle 7, the connecting line between antennas 2, 3 is designed with respect to available LOS satellites 9 exclusively in the transverse direction to the longitudinal axis of vehicle 7.

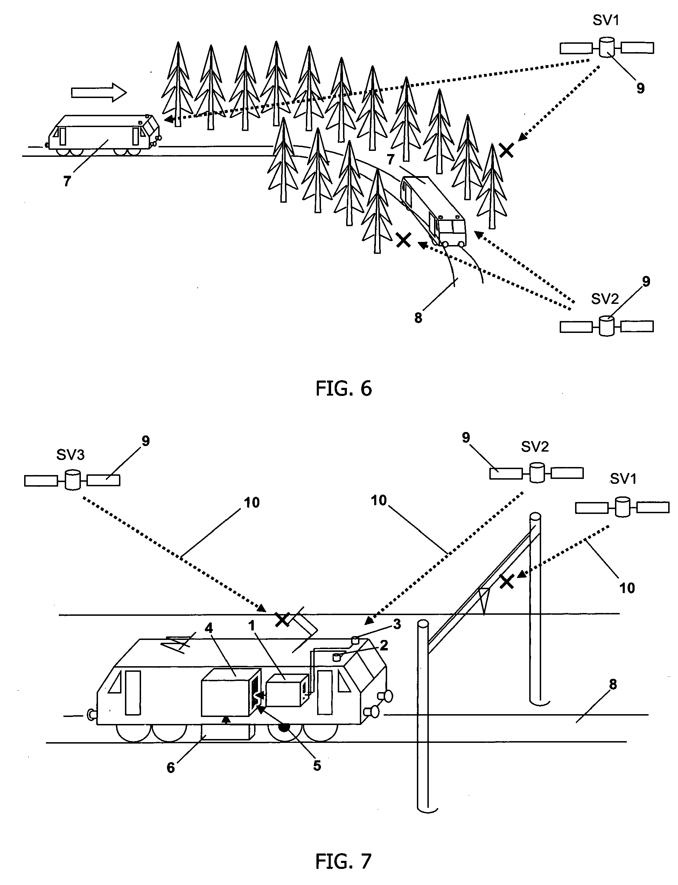

As was stated above, one of the goals of this invention is to increase the availability of determining the movement direction, changes of movement direction and position of vehicle 7 even in case of a low number of available satellites 9 from the satellite navigation system. From the description of the method used in the invention, it is clear that a single satellite 9 is sufficient to obtain the carrier phase difference and together with the track map 8 suffices to determine the movement direction and position of vehicle 7 on track 8. In case of a shielded curved track 8 (e.g. in a valley) with a low number of received satellites 9, a process called "hand-over" (from one satellite 9 to another satellite 9) will ensure that the position of vehicle 7 on track 8 will continue to be determined without frequent failures (Fig. 6).

Another goal is a reduction of the frequency of reinitializations, suppressing the effects of multi-path of signal 10 and increasing the reliability of determining the movement direction, changes of movement direction and position of vehicle 7 when receiving signals 10 from several navigation satellites 9. Each satellite 9 which is "initialized" (meaning that the difference of ambiguities to antennas 2, 3 is known) on a straight section of a track 8 or based on a known position of vehicle 7 on track 8 determined by a previously initialized satellite or satellites 9 adds a separate solution of the task to determine the movement direction/position of vehicle 7 on track 8.

If the signal 10 is shielded from one or several satellites 9 by an obstacle (for instance a beam type catenary bridge, footbridge, bridge etc.) and so-called cycle-slip (missing a cycle or one wavelength) for one or both antennas 2, 3, reinitialization is, unlike in previous methods, not necessary. Signals 10 from other (at least one) satellites 9 can continue providing single differences of carrier phases of the navigation signal 10, i.e. determining the movement direction and position of vehicle 7 on track 8 (Fig. 7).

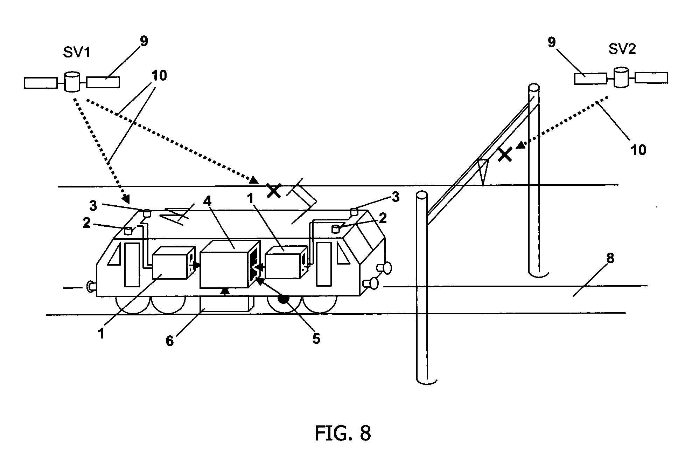

Solutions from individual satellites 9 are compared. This increases reliability and also detects multi-path propagation of signal 10 from a specific satellite 9. An additional increase of reliability in determining the position of vehicle 7 on track 8 is obtained by utilizing the knowledge of the initial and final angle of the curve of track 8 used by vehicle 7 or of the whole trajectory of the curve of track 8. Furthermore, the reliability of determining the position of vehicle 7 on track 8 is increased by gradual detection of individual traversed curves on track 8 with the use of the previous principle of comparing the initial and final angle of curves on track 8 or of the whole trajectory of the curve of track 8. Finally, another increase of reliability is obtained by using a second receiver 1 with antennas 2, 3 on the other end of vehicle 7 (Fig. 8). This configuration is especially suitable for electric vehicles, whose pantograph equipment may limit the line of sight in the longitudinal direction under a low elevation angle. Another goal of this invention is removing the need to determine ambiguities during reinitialization after complete interruption of the receipt of signal 10 from the satellite navigation system. In case of a complete reset and reinitialization of the method and system for determining movement direction, changes of movement direction and position of vehicle 7 on track 8, it is possible to use a process which is identical to initialization, i.e. determination of the position of vehicle 7 on track 8 based on the code phase measurement of any of the signals 10 from the satellite navigation system with a sufficiently wide confidence interval on a straight section of track 8 together with a database of the map of track 8 with linked data to the position and movement direction of vehicle 7 on track 8. This immediately determines the difference of ambiguities $N_1 - N_2$ necessary to resolve the formula (2). In case the reception of signal 10 from the last satellite 9 is interrupted for a certain period (where the error in the travelled distance does not exceed the required value), an odometric system can be used (an odometer 5 and/or Doppler radar 6) which together with a map of the track 8 allows the quick reinitialization of the system for determining the movement direction, changes of movement direction and positions of vehicle 7 on track 8.

Another goal of this invention is the removal of the necessity to determine time offsets between the time bases of individual receivers and the time of the satellite navigation system. If two or more processing channels of receiver 1 of the satellite navigation system process signal 10 from an identical satellite 9 using the common time base of receiver 1, the time offset between the time base of receiver 1 and the time base of the satellite navigation system is equal for all of the processing channels of receiver 1, and can thus be eliminated by a single difference, as is done in formulas (1) and (2).

The method and system described in this invention for determining the movement direction and position of a vehicle based on the principle of comparing single differences of measured carrier phases of signals from a satellite navigation system and single differences of the actual distances between a satellite of satellite navigation system and the antennas of the receiver of satellite navigation system are suitable for use especially to detect the movement direction of a train on switches and determining the position of a train.

List of reference numerals

| | |
|---|---|
| 1 | receiver of signals 10 from the satellite navigation system |
| 2, 3 | antennas |
| 4 | onboard processing unit |
| 5 | odometer |
| 6 | Doppler radar |
| 7 | vehicle |
| 8 | track |
| 9 | satellite |
| 10 | signals of the satellite navigation system |
| 11 | orbits of satellites 9 |
| D | part of a straight section of track 8 suitable for system initialization |
| E | straight section of track 8 |

**Claims**

1.  A method of determining the movement direction and position of a vehicle (7), especially a track vehicle, based on satellite navigation, where first the position of a vehicle (7) is determined by measuring the code phase of signal (10) from a satellite navigation system with a width of a confidence interval of the position of vehicle (7) determined from the statistical distribution in compliance with the required reliability on a basically straight section (E) of track (8), where the position determined in this way is assigned to a corresponding position in the map database of track (8) and the direction of the track (8) listed in the map database of track (8), the carrier phases of the signal (10) from at least one satellite of the satellite navigation system are being measured where the position of this satellite is known at the time of measurement and is received at least by a pair of antennas (2,3) located on the vehicle, then the difference between the measured values of the carrier phase of the signal (10) received by individual antennas (2,3) is determined, and subsequently, from the known position of the satellite (9) and the position of at least one pair of antennas (2,3), based on the known trajectory of the track (8) listed in the map database (8) and assigned to the vehicle's (7) position on the track (8), the actual distances between the antennas (2,3) and the satellite (9) are determined, **characterized in that** subsequently also the difference between these distances for at least one pair of the antennas (2,3) is determined, and where by comparing the differences of the actual distances and differences of measured carrier phases of the signal (10) of the satellite navigation signal the closest differences are chosen and the actual position and movement direction of vehicle (7) on the track (8) is determined, where the accuracy of the determined position of the vehicle (7) on the track (8) is proportional to the radius of the curve of the track (8).

2. The method according to claim 1, **characterized in that** the pairs of antennas (2, 3) are oriented transversally to the longitudinal axis of the vehicle (7).

3. The method according to claim 1, **characterized in that** a number of satellites (9) are used to increase reliability of the determined position and movement direction of vehicle (7) on the track (8).

4. The method according to claim 1, **characterized in that** it is used to determine the movement direction of a train on a railroad switch in the track (8).

5. The method according to claim 1, **characterized in that** in order to increase reliability in determining the position and movement direction of vehicle (7) on track (8), it is used for determination of the initial and final angle of the curve on the track (8), and for detection subsequent curves during passage of the vehicle (7) through such a curve or curves.

6. The method according to claim 1 or 2, **characterized in that** in order to increase reliability in determining the position and movement direction of vehicle (7) on track (8), a pair of the antennas (2,3) located on opposite ends of the vehicle (7) is used.

7. The method according to claim 1, **characterized in that** it is used for specification or calibration of the absolute position of vehicle (7) based on further relative sensors located on the vehicle (7).

8. A system for implementing the method according to any of the claims 1 to 7 comprising at least one receiver (1) of signals (10) from at least one satellite (9) of a satellite navigation system, **characterized in that** the receiver (1), connected through its antenna inputs to a pair of antennas (2,3) located on the vehicle (7) has independent channels for processing signals from both antenna inputs, allowing parallel processing of signals (10) from the identical satellite (9) from both of these inputs, and is equipped with a common time base consisting of a local oscillator, where antennas (2,3) on the vehicle (7) are oriented so that the connecting line between their centres is transversal to the longitudinal axis of the vehicle (7) and has a constant, known length (l), whereas the receiver (1) is connected to an onboard processing unit (4) with a map database of the track (8).

9. The system according to claim 8, **characterized in that** the onboard processing unit (4) is connected to an odometer (5) and/or Doppler radar (6).

10. The system according to claim 8, **characterized in that** on the vehicle (7) at least one additional pair of antennas (2, 3) and a corresponding additional receiver (1) are arranged.


**Patentansprüche**

1. Verfahren zum Bestimmen der Bewegungsrichtung und Position eines Fahrzeugs (7), insbesondere eines Schienenfahrzeugs, basierend auf einer Satellitennavigation, wobei zuerst die Position eines Fahrzeugs (7) durch Messen der Codephase eines Signals (10) von einem Satellitennavigationssystem mit einer Weite eines Vertrauensintervalls der Position des Fahrzeugs (7) bestimmt wird, die von einer statistischen Verteilung in Übereinstimmung mit der erforderlichen Zuverlässigkeit auf einem grundsätzlich geraden Abschnitt (E) einer Spur (8) bestimmt wird, wobei die auf diese Weise bestimmte Position einer entsprechenden Position in einer Kartendatenbank der Spur (8) zugewiesen und die Richtung der Spur (8) in der Kartendatenbank der Spur (8) gelistet wird, wobei die Trägerphasen des Signals (10) von wenigstens einem Satelliten des Satellitennavigationssystem gemessen werden, wobei die Position dieses Satelliten zur Zeit der Messung bekannt ist und durch ein Paar von Antennen (2, 3) die am Fahrzeug angeordnet sind, empfangen wird, dann der Unterschied zwischen den gemessenen Werten der Trägerphase des Signals (10), die von den individuellen Antennen (2, 3) empfangen wird, bestimmt wird, und nachfolgend von der bekannten Position des Satelliten (9) und der Position wenigstens eines Paars von Antennen (2, 3), basierend auf der bekannten Trajektorie der Spur (8), die in der Kartendatenbank gelistet ist und der Position des Fahrzeugs (7) auf der Spur zugewiesen ist, die aktuellen Distanzen zwischen den Antennen (2, 3) und dem Satelliten (9) bestimmt werden, **dadurch gekennzeichnet, dass** im Folgenden auch die Differenz zwischen diesen Distanzen für wenigstens ein Paar der Antennen (2, 3) bestimmt wird, und wobei durch Vergleichen der Differenzen der aktuellen Distanzen und der Differenzen der gemessenen Trägerphasen des Signals (10) des Satellitennavigationssignals die nächstgelegerien Differenzen gewählt werden und die aktuelle Position und Bewegungsrichtung des Fahrzeugs (7) auf der Spur (8) bestimmt wird, wobei die Genauigkeit der bestimmten Position des Fahrzeugs (7) auf der Spur (8) proportional zum Radius der Kurve der Spur (8).

2. Verfahren nach Anspruch 1, **dadurch gekennzeichnet, dass** die Paare an Antennen (2, 3) transversal zur Längsachse des Fahrzeugs (7) orientiert sind.

3. Verfahren nach Anspruch 1, **dadurch gekennzeichnet; dass** eine Anzahl von Satelliten (9) verwendet wird, um die Zuverlässigkeit der bestimmten Position und Bewegungsrichtung eines Fahrzeugs (7) auf der Spur (8) zu steigern.

4. Verfahren nach Anspruch 1, **dadurch gekennzeichnet, dass** es verwendet wird, um die Bewegungsrichtung eines Zugs an einer Schienenweiche in der Spur (8) zu bestimmen.

5. Verfahren nach Anspruch 1, **dadurch gekennzeichnet, dass**, um die Zuverlässigkeit beim Bestimmen der Position und der Bewegungsrichtung eines Fahrzeugs (7) auf einer Spur (8) zu steigern, es verwendet wird zur Bestimmung eines Anfangs- und Endwinkels der Kurve auf der Spur (8), und zur Detektion nachfolgender Kurven während der Durchfahrt des Fahrzeugs (7) durch solch eine Kurve oder Kurven.

6. Verfahren nach Anspruch 1 oder 2, **dadurch gekennzeichnet, dass**, um die Zuverlässigkeit beim Bestimmen der Position und Bewegungsrichtung eines Fahrzeugs (7) auf einer Spur (8) zu steigern, ein Paar von Antennen (2, 3), die an gegenüberliegenden Enden des Fahrzeugs (7) angeordnet sind, verwendet wird.

7. Verfahren nach Anspruch 1, **dadurch gekennzeichnet, dass** es zur Spezifikation oder Kalibrierung der absoluten Position des Fahrzeugs (7) basierend auf weiteren relativen Sensoren verwendet wird, die am Fahrzeug (7) angeordnet sind.

8. System zur Implementierung des Verfahrens nach einem der Ansprüche 1 bis 7, mit wenigstens einem Empfänger (1) von Signalen (10) von wenigstens einem Satelliten (9) eines Satellitennavigationssystems, **dadurch gekennzeichnet, dass** der Empfänger (1), der durch seine Antenneneingänge mit einem Paar von Antennen (2, 3) verbunden ist, die am Fahrzeug (7) angeordnet sind, unabhängige Kanäle zur Verarbeitung von Signalen beider Antenneneingängen aufweist, die ein paralleles Verarbeiten von Signalen (10) vom identischen Satelliten (9) von beiden dieser Eingänge gestatten, und mit einer gemeinsamen Zeitbasis ausgestattet ist, die aus einem lokalen Oszillator besteht, wobei Antennen (2, 3) am Fahrzeug (7) so orientiert sind, dass die Verbindungslinie zwischen ihren Zentren transversal zur Längsachse des Fahrzeugs (7) ist und eine konstante, bekannte Länge (l) hat, wobei der Receiver (1) mit einer Verarbeitungseinheit (4) an Bord mit einer Kartendatenbank der Spur (8) verbunden ist.

9. System nach Anspruch 8, **dadurch gekennzeichnet, dass** die Verarbeitungseinheit (4) an Bord mit einem Odometer (5) und/oder Dopplerradar (6) verbunden ist.

10. System nach Anspruch 8, **dadurch gekennzeichnet, dass** am Fahrzeug wenigstens ein zusätzliches Paar an Antennen (2, 3) und ein entsprechender zusätzlicher Empfänger (1) angeordnet sind.

**Revendications**

1. Procédé de détermination de la direction de mouvement et de la position d'un véhicule (7), en particulier d'un véhicule de voie, sur la base d'une navigation satellitaire, où tout d'abord la position d'un véhicule (7) est déterminée en mesurant la phase de code d'un signal (10) provenant d'un système de navigation satellitaire avec une largeur d'un intervalle de confiance de la position du véhicule (7) déterminée à partir de la distribution statistique en fonction de la fiabilité requise sur une section essentiellement droite (E) d'une voie (8), où la position déterminée de cette manière est affectée à une position correspondante dans la base de données cartographique de la voie (8) et la direction de la voie (8) répertoriée dans la base de données cartographique de la voie (8), les phases de porteuse du signal (10) provenant d'au moins un satellite du système de navigation satellitaire sont mesurées lorsque la position de ce satellite est connue au moment de la mesure et est reçue au moins par une paire d'antennes (2, 3) situées sur le véhicule, alors la différence entre les valeurs mesurées de la phase de porteuse du signal (10) reçues par les antennes individuelles (2, 3) est déterminée, et ensuite, à partir de la position connue du satellite (9) et de la position d'au moins une paire d'antennes (2, 3) sur la base de la trajectoire connue de la voie (8) répertoriée dans la base de données cartographique (8) et attribuée à la position du véhicule (7) sur la voie (8), les distances réelles entre les antennes (2, 3) et le satellite (9) sont déterminées, **caractérisé en ce qu'**ensuite la différence entre ces distances pour au moins une paire des antennes (2, 3) est également déterminée, et où en comparant les différences des distances réelles et des différences des phases de porteuse mesurées du signal (10) du signal de navigation satellitaire les différences les plus proches sont choisies et la position et la direction de mouvement réelles du véhicule (7) sur la voie (8) sont déterminées, où la précision de la position déterminée du véhicule (7) sur la voie (8) est proportionnelle au rayon de courbure de la voie (8).

2. Procédé selon la revendication 1, **caractérisé en ce que** les paires d'antennes (2, 3) sont orientées de manière transversale par rapport à l'axe longitudinal du véhicule (7).

3. Procédé selon la revendication 1, **caractérisé en ce qu'**un certain nombre de satellites (9) sont utilisés pour augmenter la fiabilité de la position et de la direction de mouvement du véhicule (7) déterminées sur la voie (8).

4. Procédé selon la revendication 1, **caractérisé en ce qu'**il est utilisé pour déterminer la direction de mouvement d'un train sur un aiguillage de chemin de fer dans la voie (8).

5. Procédé selon la revendication 1, **caractérisé en ce que** de manière à augmenter la fiabilité de la détermination de la position et de la direction de mouvement d'un véhicule (7) sur une voie (8), il est utilisé pour la détermination de l'angle initial et de l'angle final de la courbe sur la voie (8), et pour une détection de courbes suivantes au cours du passage du véhicule (7) sur une telle courbe ou sur des courbes.

6. Procédé selon la revendication 1 ou 2, **caractérisé en ce que** de manière à augmenter la fiabilité de la détermination de la position et de la direction de mouvement d'un véhicule (7) sur une voie (8), une paire d'antennes (2, 3) situées sur des extrémités opposées du véhicule (7) est utilisée.

7. Procédé selon la revendication 1, **caractérisé en ce qu'**il est utilisé pour une spécification ou un étalonnage de la position absolue d'un véhicule (7) sur la base d'autres capteurs relatifs situés sur le véhicule (7).

8. Système pour mettre en oeuvre le procédé selon l'une quelconque des revendications 1 à 7 comprenant au moins un récepteur (1) de signaux (10) provenant d'au moins un satellite (9) d'un système de navigation satellitaire, **caractérisé en ce que** le récepteur (1), connecté à travers ses entrées d'antennes vers une paire d'antennes (2, 3) situées sur le véhicule (7) a des canaux indépendants pour traiter des signaux provenant des deux entrées d'antennes, en permettant un traitement parallèle des signaux (10) provenant du satellite identique (9) à partir de ces deux entrées, et est équipé d'une base temporelle commune consistant en un oscillateur local, où les antennes (2, 3) sur le véhicule (7) sont orientées de sorte que la ligne de connexion entre leurs centres est transversale par rapport à l'axe longitudinal du véhicule (7) et a une longueur connue constante (1), alors que le récepteur (1) est connecté à une unité de traitement embarquée (4) avec une base de données cartographique de la voie (8).

9. Système selon la revendication 8, **caractérisé en ce que** l'unité de traitement embarquée (4) est connectée à un odomètre (5) et/ou à un radar Doppler (6).

10. Système selon la revendication 8, **caractérisé en ce que** sur le véhicule (7) au moins une paire d'antennes supplémentaire (2, 3) et un récepteur supplémentaire correspondant (1) sont disposés.

a)

b)

FIG. 1

FIG. 2

FIG. 3

FIG. 4

a)

b)

FIG. 5

FIG. 6

FIG. 7

FIG. 8

**EP 2 853 922 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 0118558 A1